# EUROPÄISCHE PATENTANMELDUNG

(11) **EP 3 636 495 A1**
(43) Veröffentlichungstag der Anmeldung: **15.04.2020**
(21) Anmeldenummer: 19202517.9
(22) Anmeldetag: 10.10.2019
(51) Int. Cl.: B60R 16/03, B60R 25/24, G07C 9/00, H02J 7/00, H02J 50/80

(54) **SYSTEM FÜR EIN FAHRZEUG**

(30) Priorität: 11.10.2018 DE 102018125222
(71) Anmelder: Huf Hülsbeck & Fürst GmbH & Co. KG, 42551 Velbert (DE)
(72) Erfinder: Schindler, Mirko, 42549 Velbert (DE)
(74) Vertreter: Patentanwälte Bals & Vogel

(57) **Zusammenfassung**

System (1) für ein Fahrzeug (2), insbesondere zur Bereitstellung eines passiven Zugangssystems des Fahrzeuges (2), aufweisend:
- eine Ladevorrichtung (10) zur kontaktlosen Energieübertragung an ein mobiles Gerät (100), insbesondere zur kontaktlosen Aufladung des mobilen Geräts (100) mittels induktiver Energieübertragung,
- ein Kommunikationsmittel (20) zur Bereitstellung einer kontaktlosen Kommunikation eines Kommunikationssystems (30) des Fahrzeuges (2) über die Ladevorrichtung (10).

## Beschreibung

Die vorliegende Erfindung betrifft ein System für ein Fahrzeug zur kontaktlosen Kommunikation und kontaktlosen Energieübertragung. Ferner bezieht sich die Erfindung auf eine Ladevorrichtung sowie eine Verwendung einer Ladevorrichtung und auf einen ID-Geber.

Es ist aus dem Stand der Technik bekannt, dass Fahrzeuge wenigstens ein Kommunikationssystem zur Kommunikation mit einem mobilen Gerät aufweisen können. Das Kommunikationssystem dient dabei z. B. dazu, über Funksignale kontaktlos Daten zur Authentifizierung mit dem mobilen Gerät auszutauschen. Darüber hinaus kann zur Bereitstellung eines passiven Zugangssystems ein Wecksignal ausgesendet werden, welches bei Empfang durch das mobile Gerät den Authentifizierungsvorgang initiieren kann. Zur Aussendung des Wecksignals wird häufig eine LF-Kommunikation verwendet (LF steht hierbei für Low Frequency).

Das mobile Gerät kann bspw. ein Smartphone oder ID-Geber oder dergleichen sein, welches zur Authentifizierung ebenfalls aktiv Daten an das Fahrzeug kontaktlos übertragen muss. Dabei weist das mobile Gerät eine wiederaufladbare Energiequelle auf, um die Kommunikation bzw. Datenübertragung bereitzustellen.

Bei mobilen Geräten ist es teilweise ein Problem, dass die Funktionsfähigkeit zur Authentifizierung bei einem zu geringen Ladezustand des Energiespeichers nicht mehr gewährleistet ist. Es ist zwar bekannt, dass Ladevorrichtungen auch bei einem Fahrzeug zur Wiederaufladung des Energiespeichers des mobilen Geräts dienen können. Dies kann jedoch zu einem erhöhten technischen Aufwand und/oder Platzaufwand führen.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine verbesserte Lösung zur Kommunikation und Energieübertragung, insbesondere Aufladung, bereitzustellen.

Die voranstehende Aufgabe wird gelöst durch ein System mit den Merkmalen des unabhängigen Systemanspruchs, eine Ladevorrichtung mit den Merkmalen des unabhängigen Vorrichtungsanspruchs sowie durch eine Verwendung mit den Merkmalen des Weiteren nebengeordneten Verwendungsanspruchs und durch einen ID-Geber mit den Merkmalen des weiteren nebengeordneten Vorrichtungsanspruchs. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen System beschrieben sind, selbstverständlich auch im Zusammenhang mit der erfindungsgemäßen Ladevorrichtung sowie der erfindungsgemäßen Verwendung und dem erfindungsgemäßen ID-Geber, und jeweils umgekehrt, sodass bezüglich der Offenbarung zu den einzelnen Erfindungsaspekten stets wechselseitig Bezug genommen wird bzw. werden kann.

Die Aufgabe wird insbesondere gelöst durch ein System für ein Fahrzeug, insbesondere zur Bereitstellung eines passiven Zugangssystems des Fahrzeuges, aufweisend:
- eine Ladevorrichtung zur kontaktlosen Energieübertragung an ein mobiles Gerät, insbesondere zur kontaktlosen Aufladung des mobilen Geräts mittels induktiver Energieübertragung,
- ein Kommunikationsmittel zur Bereitstellung einer kontaktlosen Kommunikation für das Fahrzeug, insbesondere einer Kommunikationsfunktion des Fahrzeuges und/oder einer Kommunikation eines Kommunikationssystems des Fahrzeuges, vorzugsweise einer Kommunikation mit dem mobilen Gerät für das Fahrzeug, über die Ladevorrichtung.

Das Kommunikationsmittel bietet dabei den Vorteil, dass eine Mehrfachnutzung der Ladevorrichtung sowohl für die Kommunikation als auch für die Aufladung bereitgestellt werden kann. Hierdurch kann der technische Aufwand verringert und/oder der Platzbedarf verringert werden. Insbesondere kann es sich bei der Ladevorrichtung um ein Ladegerät handeln.

Die Ladevorrichtung kann z. B. das Kommunikationsmittel als zusätzliches und/oder nachträglich (nach der vollständigen Herstellung der Ladevorrichtung) hinzugefügtes Anpassungsmittel aufweisen, sodass insbesondere die Ladevorrichtung auch ohne das Kommunikationsmittel funktionsfähig und/oder unabhängig vom Fahrzeug zur Aufladung des mobilen Geräts genutzt werden kann. Vorzugsweise nur durch das Kommunikationsmittel kann dabei eine Anpassung der Ladevorrichtung derart erfolgen, dass die Ladevorrichtung ebenfalls zur kontaktlosen Kommunikation genutzt werden kann. Hierzu weist das Kommunikationsmittel z. B. eine Signalverbindung, vorzugsweise elektrische Verschaltung einer fahrzeugseitigen Elektronik außerhalb der Ladevorrichtung des Kommunikationssystems mit einer Elektronik der Ladevorrichtung auf.

Darüber hinaus kann es möglich sein, dass das Kommunikationsmittel zumindest teilweise außerhalb der Ladevorrichtung vorgesehen ist, z. B. als Teil des Fahrzeuges und/oder eines Kommunikationssystems des Fahrzeuges. Bspw. dient dabei das Kommunikationsmittel zur Kopplung des Kommunikationssystems mit der Ladevorrichtung.

Es ist außerdem denkbar, dass die Ladevorrichtung das Kommunikationsmittel vollständig bereits bei der Herstellung als notwendigen Teil zur Energieübertragung und/oder Aufladung aufweist, um z. B. originär eine weitere Kommunikation (z. B. nicht für das Fahrzeug) der Ladevorrichtung zur Steuerung der Aufladung bereitzustellen. In diesem Fall kann die Bereitstellung der kontaktlosen Kommunikation für das Fahrzeug über die Ladevorrichtung ggf. ohne eine Kopplung der Ladevorrichtung mit dem Kommunikationssystem des Fahrzeuges erfolgen. Bspw. kann ein von der Ladevorrichtung wiederholt ausgesendetes Signal (wie ein magnetisches LF-Feld) als Wecksignal genutzt werden, um eine Authentifizierung am Fahrzeug durch das mobile Gerät oder ein weiteres mobiles Gerät wie einen ID-Geber zu initiieren. Auf diese Weise wird die (erste) Kommunikation, d. h. konkret die Kommunikationsfunktion des "Weckes", für das Fahrzeug bereitgestellt. Anschließend kann der weitere Kommunikationsverlauf zur Authentifizierung ggf. außerhalb der Ladevorrichtung direkt mit dem Fahrzeug stattfinden, wie z. B. ein Codeaustausch zwischen dem mobilen Gerät (oder weiteren mobilen Gerät) und der Elektronik des Kommunikationssystems im Fahrzeug (außerhalb der Ladevorrichtung) ggf. über eine andere Funkfrequenz als bei der ersten Kommunikation. Bei einer derartigen Funktionsweise kann die Ladevorrichtung funktional in das Kommunikationssystem integriert sein (da sie eine der für das Fahrzeug und/oder für das Sicherheits- und/oder Zugangssystem des Fahrzeuges und/oder für die Authentifizierung notwendigen Kommunikationsfunktionen bereitstellt), strukturell jedoch ggf. getrennt oder separat vom Fahrzeug ausgebildet sein. Dies ermöglicht es, die Ladevorrichtung mobil im Fahrzeug zu nutzen oder wieder zu entfernen.

Es ist denkbar, dass das Kommunikationsmittel zur Bereitstellung einer Kommunikationsfunktion der Kommunikation für das Fahrzeug über die Ladevorrichtung ausgeführt ist. Die Kommunikationsfunktion kann z. B. eine Kommunikationsfunktion eines Sicherheitssystems des Fahrzeuges, z. B. zur Authentifizierung des oder eines weiteren mobilen Geräts am Fahrzeug oder zur Annäherungsdetektion des oder eines weiteren mobilen Geräts oder dergleichen, sein.

Vorteilhafterweise ist das Kommunikationsmittel dazu ausgeführt, die Ladevorrichtung so anzupassen, dass ein Kommunikationssystem des Fahrzeuges (insbesondere ein LF-Kommunikationssystem) die Ladevorrichtung als LF-Kommunikationsschnittstelle nutzen kann. Dabei kann die Ladevorrichtung bspw. als Qi-Lader ausgeführt sein. Die Kommunikation und/oder die Kommunikationsfunktion kann insbesondere eine Funktion eines Kommunikationssystems des Fahrzeuges, und bevorzugt als Broadcast-Kommunikation und/oder als Kommunikation mit dem oder wenigstens einen weiteren mobilen Gerät ausgeführt sein. Dabei ist es denkbar, dass die Kommunikation als unidirektionale oder als bidirektionale Kommunikation ausgestaltet ist.

Vorteilhafterweise kann die Energieübertragung kontaktlos (d. h. z. B. drahtlos) von der Ladevorrichtung an das mobile Gerät erfolgen, bspw. mittels resonanter induktiver Kopplung. Hierbei kann vorgesehen sein, dass die Energieübertragung mit einer maximalen Leistungsübertragung von 15 Watt oder 10 Watt oder 5 Watt erfolgt.

Zur Energieübertragung und/oder Kommunikation kann bspw. eine Übertragungsvorrichtung, wie eine (ladegerätseitige) Antenne, der Ladevorrichtung genutzt werden. Die Übertragungsvorrichtung bzw. die Antenne ist z. B. als ebene und/oder ringförmige Spule ausgeführt.

Die Ladevorrichtung ist vorteilhafterweise ein Ladegerät und/oder eine Ladestation zum kontaktlosen (drahtlosen) Wiederaufladen von Energiespeichern (insbesondere Akkumulatoren), z. B. eines Energiespeichers des mobilen Geräts. Bevorzugt ist die Ladevorrichtung nicht an das Fahrzeug und/oder an das Kommunikationssystem des Fahrzeuges angepasst oder weist das Kommunikationsmittel zur Anpassung auf. Besonders bevorzugt kann die Ladevorrichtung zur Nutzung des Kommunikationsmittels bzw. Anpassung durch das Kommunikationsmittel unverändert bleiben. Alternativ wird durch das Kommunikationsmittel eine elektrische oder elektronische Modifikation der Ladevorrichtung veranlasst. Auch kann die Ladevorrichtung originär z. B. nicht für die Kommunikation (des Kommunikationssystems) des Fahrzeuges ausgeführt sein, sondern nur zum Aufladen mittels kontaktloser Energieübertragung. Das Aufladen mittels der kontaktlosen Energieübertragung kann dabei ggf. auch eine eigene (für die Aufladung genutzte) Kommunikation umfassen, welche insbesondere unabhängig vom Kommunikationssystem erfolgt. Für die Energieübertragung kann die Ladevorrichtung z. B. elektrisch zur Energieversorgung mit einem Bordnetz des Fahrzeuges verbunden sein, z. B. über eine elektrische Versorgungsleitung.

Vorteilhaft ist es zudem, wenn das Fahrzeug als ein Kraftfahrzeug, insbesondere als ein Hybridfahrzeug oder als ein Elektrofahrzeug ausgebildet ist, vorzugsweise mit einem Hochvolt-Bordnetz und/oder einem Elektromotor. Außerdem kann es möglich sein, dass das Fahrzeug als ein Brennstoffzellenfahrzeug und/oder Personenkraftfahrzeug und/oder semiautonomes oder autonomes Fahrzeug ausgebildet ist. Vorteilhafterweise weist das Fahrzeug ein Sicherheitssystem mit einem Kommunikationssystem auf, welches z. B. durch wenigstens eine Kommunikation mit einem (dem oder einen weiteren) mobilen Gerät, wie einem Identifikationsgeber (ID-Geber), eine Authentifizierung ermöglicht. In Abhängigkeit von der Kommunikation und/oder der Authentifizierung kann wenigstens eine Funktion des Fahrzeuges aktiviert werden. Falls hierzu die Authentifizierung des mobilen Geräts notwendig ist, kann es sich bei der Funktion um eine sicherheitsrelevante Funktion handeln, wie ein Entriegeln des Fahrzeuges oder eine Freigabe eines Motorstarts. Somit kann das Sicherheitssystem auch als ein passives Zugangssystem ausgebildet sein, welches ohne aktive manuelle Betätigung des mobilen Geräts bzw. ID-Gebers die Authentifizierung und/oder die Aktivierung der Funktion bei Detektion der Annäherung des mobilen Geräts bzw. des ID-Gebers an das Fahrzeug initiiert. Hierzu wird bspw. wiederholt ein Wecksignal durch das Kommunikationssystem des Sicherheitssystems ausgesendet, welches durch das mobile Gerät bei der Annäherung empfangen werden kann, und dann die Authentifizierung auslöst. Auch kann die Funktion eine Aktivierung einer Fahrzeugbeleuchtung und/oder ein Betätigen (Öffnen und/oder Schließen) einer Klappe (z. B. Front- oder Heck- oder Seitenklappe bzw. -tür) betreffen. Bspw. wird automatisch bei der Detektion der Annäherung die Fahrzeugbeleuchtung aktiviert und/oder bei der Detektion einer Geste eines Benutzers die Klappe betätigt.

Beispielsweise kann es vorgesehen sein, dass das Kommunikationsmittel als ein Teil einer Elektronik der Ladevorrichtung (Ladevorrichtungselektronik) zur Bereitstellung einer Kommunikationsfunktion des Fahrzeuges ausgebildet ist und/oder eine elektrische Kopplungsvorrichtung zur Integration der Ladevorrichtung in ein Kommunikationssystem des Fahrzeuges aufweist. Auch die Kopplungsvorrichtung kann dazu dienen, eine Kommunikationsfunktion des Fahrzeuges bereitzustellen. So kann auf diese Weise durch eine technisch einfach zu realisierende elektrische Kopplung die Ladevorrichtung in das Kommunikationssystem integriert werden, sodass die Ladevorrichtung ebenfalls zur Kommunikation genutzt werden kann. Darüber hinaus kann die elektrische Kopplungsvorrichtung auch eine elektrische Verbindung der Elektronik des Kommunikationssystems, welche sich außerhalb der Ladevorrichtung befindet, mit einer Übertragungsvorrichtung der Ladevorrichtung aufweisen. Hierdurch wird die Elektronik des Kommunikationssystems in die Lage versetzt, die Übertragungsvorrichtung der Ladevorrichtung ebenfalls zur Kommunikation zu nutzen. Dagegen kann das Kommunikationsmittel, wenn es als der Teil der Ladevorrichtungselektronik vorgesehen ist, ggf. auch ohne Verbindung mit der Elektronik des Kommunikationssystems außerhalb der Ladevorrichtung die Kommunikationsfunktion bereitstellen. In anderen Worten kann die Ladevorrichtung gemäß einer optionalen Ausbildung der Erfindung auch unabhängig von der Elektronik des Kommunikationssystems außerhalb der Ladevorrichtung oder des Fahrzeuges die Kommunikationsfunktion bereitstellen. Bspw. wird hierzu das Kommunikationsmittel genutzt, um in regelmäßigen Abständen ein (elektromagnetisches) Feld über die Übertragungsvorrichtung auszusenden, welches durch das oder ein weiteres mobile(s) Gerät erfasst werden kann. Es kann sich dabei um ein Wecksignal handeln, um bei dem mobilen Gerät einen Authentifizierungsvorgang zu initiieren und/oder das mobile Gerät in der Nähe zum Fahrzeug zu detektieren. Anschließend kann das mobile Gerät z. B. in einem anderen Frequenzbereich und/oder über eine zweite Kommunikation direkt mit einem Kommunikationssystem des Fahrzeuges kommunizieren, um ein Antwortsignal an das Fahrzeug zu übertragen. An dieser zweiten Kommunikation kann die Ladevorrichtung ggf. nicht mehr teilnehmen.

Vorteilhaft ist es darüber hinaus, wenn im Rahmen der Erfindung das Kommunikationsmittel, vorzugsweise eine elektrische Kopplungsvorrichtung des Kommunikationsmittels, zur Signalübertragung an die Ladevorrichtung ausgeführt ist, um anhand der Signalübertragung ein Kommunikationssignal der Kommunikation über die Ladevorrichtung auszusenden, vorzugsweise mittels einer Übertragungsvorrichtung der Ladevorrichtung, bevorzugt zumindest teilweise gleichzeitig mit der zusätzlichen Aussendung des Kommunikationssignals mittels weiterer Antennen des Fahrzeuges und/oder des Kommunikationssystems. Auf diese Weise kann durch das Kommunikationsmittel ermöglicht werden, dass die Ladevorrichtung funktionaler Teil des Kommunikationssystems wird. Insbesondere erfüllt dabei die Ladevorrichtung ausschließlich die Funktion für das Kommunikationssystem, dass die Ladevorrichtung die Übertragungsvorrichtung als Antenne für das Kommunikationssystem bereitstellt. Somit kann auf eine zusätzliche Antenne verzichtet werden, da die Übertragungsvorrichtung als diese Antenne des Kommunikationssystems genutzt werden kann. Bspw. nimmt dabei die Übertragungsvorrichtung den Platz einer zentralen Antenne des Kommunikationssystems ein, welche andernfalls zusätzlich vorgesehen sein müsste.

Vorteilhafterweise kann die Kommunikation zumindest teilweise durch ein Aussenden eines Kommunikationssignals, insbesondere Funksignals und/oder eines magnetischen Wechselfelds, erfolgen. Bspw. ist das Kommunikationssignal zur induktiven Kopplung und/oder zur Aussendung in einen Umgebungsbereich des Fahrzeuges ausgeführt. Der Abstand vom Fahrzeug, in dem das Kommunikationssignal empfangen werden kann, kann z. B. mindestens 1 m oder mindestens 2 m oder mindestens 5 m oder mindestens 10 m betragen. Dabei kann das Kommunikationssignal der Kommunikation als ein Wecksignal ausgebildet sein, um das oder ein weiteres mobile(s) Gerät zu detektieren. Das Wecksignal wird bspw. mit einer Frequenz im LF (Low Frequency) Bereich, bspw. von (im Wesentlichen) 125 kHz ausgesendet. Es kann möglich sein, dass die Kommunikation als unidirektionale Kommunikation ausgeführt ist, sodass durch die Kommunikation (in diesem Frequenzbereich) ausschließlich das Aussenden des Wecksignals erfolgt. Über eine weitere Kommunikation, z. B. HF (High Frequency) Kommunikation, des Kommunikationssystems kann ggf. ein Empfang durch das Kommunikationssystem stattfinden. So kann das mobile Gerät z. B. nach einem Empfang des Wecksignals ein Antwortsignal über eine HF-Frequenz, z. B. (im Wesentlichen) 433 MHz aussenden. Dieses kann wiederum vom Kommunikationssystem des Fahrzeuges empfangen werden, um die Authentifizierung des mobilen Geräts durchzuführen. Hierzu wird bspw. über das Antwortsignal ein Code an das Fahrzeug gesendet, welches durch eine Elektronik des Fahrzeuges mit einem vorgespeicherten geheimen Code verglichen wird. Falls beide Codes übereinstimmen, kann die Authentifizierung erfolgreich sein.

Es ist ferner denkbar, dass das Kommunikationsmittel eine Kopplungsvorrichtung zur elektrischen Verbindung einer Elektronik des Fahrzeuges außerhalb der Ladevorrichtung mit einer Ladevorrichtungselektronik und/oder mit einer Übertragungsvorrichtung der Ladevorrichtung aufweist, um über diese Verbindung die Kommunikation zu initiieren. Bspw. kann die Kopplungsvorrichtung dazu dienen, über die Kopplungsvorrichtung eine Signalübertragung von der Elektronik des Fahrzeuges (außerhalb der Ladevorrichtung) an die Ladevorrichtung, insbesondere an die Übertragungsvorrichtung, durchzuführen. Dies kann bspw. die Kommunikation dadurch initiieren, dass aufgrund der Signalübertragung ein Kommunikationssignal (wie ein Funksignal oder ein magnetisches Wechselfeld) ausgesendet wird.

Optional kann es vorgesehen sein, dass die Ladevorrichtung primär und/oder originär nur eine kontaktlose Aufladung des mobilen Geräts als Funktionalität der Energieübertragung aufweist, wobei vorzugsweise die Aufladung funktional autonom und/oder unabhängig von einem Kommunikationssystem des Fahrzeuges bereitgestellt ist, und bevorzugt die Bereitstellung der kontaktlosen Kommunikation als sekundäre Funktionalität der Energieübertragung ausgeführt ist. Dabei kann es möglich sein, dass zwischen dieser primären Funktionalität (d. h. der kontaktlosen Aufladung) und der sekundären Funktionalität abwechselnd und/oder wiederholt umgeschaltet wird. In anderen Worten kann abwechselnd entweder die Energieübertragung oder die Kommunikation für das Fahrzeug durch die Ladevorrichtung bereitgestellt werden. Insbesondere wird unter der Kommunikation die Kommunikation des Kommunikationssystems z. B. zur Authentifizierung verstanden. Zusätzlich kann ggf. auch während der Energieübertragung eine weitere Kommunikation der Ladevorrichtung stattfinden. Dies hat den Vorteil, dass die Aufladung zuverlässig bereitgestellt werden kann, und dennoch durch das Umschalten ebenfalls die Kommunikation für das Fahrzeug genutzt werden kann.

Vorteilhafterweise kann im Rahmen der Erfindung vorgesehen sein, dass die Ladevorrichtung unangepasst an das Fahrzeug und/oder an ein Kommunikationssystem des Fahrzeuges ausgeführt ist oder lediglich das Kommunikationsmittel als nachträglich integrierte Anpassung aufweist. Unter nachträglich integriert wird bspw. verstanden, dass die Integration erst nach einem Herstellungsprozess der Ladevorrichtung erfolgt. Dies hat den Vorteil, dass kostengünstig eine vorgefertigte Ladevorrichtung genutzt werden kann, welche technisch flexibel durch das Kommunikationsmittel (als Anpassungsmittel) in das Kommunikationssystem integriert werden kann.

Es ist ferner denkbar, dass die Ladevorrichtung eine Übertragungsvorrichtung, vorzugsweise eine Antenne und/oder Übertragungsspule, aufweist, um eine Aussendung von Kommunikationssignalen der Kommunikation (des Kommunikationssystems) und die Energieübertragung zur Aufladung des mobilen Geräts über die gleiche Übertragungsvorrichtung durchzuführen. Zur Bereitstellung dieser vorteilhaften Mehrfachnutzung ist es ggf. erforderlich, dass durch eine Elektronik des Kommunikationssystems und/oder durch das Kommunikationsmittel zwischen der Aussendung der Kommunikationssignale für die Kommunikation (des Kommunikationssystems) und der Energieübertragung umgeschaltet wird, sodass entweder die Kommunikation (des Kommunikationssystems) oder die Aufladung über die Übertragungsvorrichtung erfolgt.

Außerdem ist es von Vorteil, wenn die bereitgestellte kontaktlose Kommunikation für das Fahrzeug eine erste Kommunikation ist, und die Ladevorrichtung ferner dazu ausgeführt ist, auch bei der Energieübertragung eine andersartige weitere, zweite Kommunikation mit dem mobilen Gerät durchzuführen, welche sich von der ersten Kommunikation hinsichtlich der Kommunikationstechnologie und/oder des Modulationsverfahrens unterscheidet. Der Unterschied kann z. B. darin liegen, dass die zweite Kommunikation anders als die erste Kommunikation eine induktive Kopplung mit dem mobilen Gerät voraussetzt und/oder die induktive Kopplung in einer geringeren maximalen Entfernung voraussetzt. Auch kann es möglich sein, dass die zweite Kommunikation (anders als die erste Kommunikation) als die Modulationsart eine Lastmodulation verwendet. Ferner ist es denkbar, dass die Ladevorrichtung als Kommunikationstechnologie für die zweite Kommunikation eine Technologie gemäß einem Qi-Standard verwendet, anders als die erste Kommunikation. Darüber hinaus kann sich die verwendete Kommunikationsfrequenz unterscheiden, bspw. ist die Kommunikationsfrequenz der zweiten Kommunikation 100 kHz und die Kommunikationsfrequenz der ersten Kommunikation 125 kHz.

Auch ist es optional denkbar, dass die Ladevorrichtung eine bauliche Einheit bildet, und vorzugsweise baulich getrennt von weiteren Komponenten des Fahrzeuges, insbesondere des Kommunikationssystems und/oder einer weiteren Elektronik des Fahrzeuges ausgebildet ist. Bspw. kann die Ladevorrichtung ein Gehäuse aufweisen, welches eine Ladevorrichtungselektronik zumindest teilweise umgibt. Dabei kann sich dieses Gehäuse zwischen der Ladevorrichtungselektronik der Ladevorrichtung und der weiteren Elektronik des Kommunikationssystems erstrecken. Auch eine Übertragungsvorrichtung z. B. einer Antenne der Ladevorrichtung, kann dabei Teil der Ladevorrichtungselektronik sein.

Es ist vorteilhafterweise möglich, dass die Ladevorrichtung ausschließlich eine einzige elektrische Verbindung zum Fahrzeug aufweist, wobei diese elektrische Verbindung ausschließlich zur Energieversorgung der Ladevorrichtung ausgeführt ist. Somit kann auf eine Steuerung oder Signalverbindung zwischen der Elektronik des Fahrzeuges und der Ladevorrichtung verzichtet werden, sodass die Ladevorrichtung autonom die Kommunikation durchführen kann.

Auch kann es möglich sein, dass die Ladevorrichtung vollständig das Kommunikationsmittel aufweist und dazu ausgeführt ist, mittels des Kommunikationsmittels unabhängig und/oder autonom vom Fahrzeug die Kommunikation für das Fahrzeug durchzuführen, vorzugsweise ein Kommunikationssignal der Kommunikation als Wecksignal für das oder ein weiteres mobiles Gerät (wie einen ID-Geber) auszusenden. Bspw. kann die Ladevorrichtung dafür angepasst sein (z. B. durch das Kommunikationsmittel) und/oder dafür konfiguriert sein, das Wecksignal entsprechend den Spezifikationen des Fahrzeuges auszusenden. Die weitere Kommunikation kann dann z. B. zur Authentifizierung zwischen dem mobilen Gerät bzw. ID-Geber und dem Fahrzeug stattfinden.

Des Weiteren ist es im Rahmen der Erfindung optional möglich, dass für die Bereitstellung der kontaktlosen Kommunikation für das Fahrzeug ein Kommunikationssystem, vorzugsweise ein LF-Kommunikationssystem, in das Fahrzeug als Teil einer Fahrzeugelektronik integriert ist, wobei das Kommunikationssystem wenigstens eine Antenne, vorzugsweise LF-Antenne, ebenfalls zur Bereitstellung der kontaktlosen Kommunikation, vorzugsweise LF-Kommunikation, aufweist. Bspw. können wenigstens zwei oder wenigstens drei oder wenigstens vier weitere Antennen des Kommunikationssystems vorgesehen sein, und ggf. gleichzeitig mit einer Übertragungsvorrichtung der Ladevorrichtung zur Aussendung eines Kommunikationssignals genutzt werden. Damit kann eine zuverlässige Kommunikation mit dem mobilen Gerät gewährleistet werden.

Des Weiteren ist es denkbar, dass ein Kommunikationssystem des Fahrzeuges dazu ausgebildet ist, die kontaktlose Kommunikation mittels des Kommunikationsmittels über die Ladevorrichtung mit dem mobilen Gerät und/oder einem weiteren mobilen Gerät durchzuführen, um vorzugsweise eine Authentifizierung des mobilen Geräts durchzuführen.

Hierzu kann es möglich sein, dass das Kommunikationsmittel eine Datenübertragung von einer Fahrzeugelektronik, z. B. von einem Steuergerät oder einer zentralen Fahrzeugelektronik, an die Ladevorrichtung (insbesondere eine Ladevorrichtungselektronik) durchführt. Dies hat den Vorteil, dass die Ladevorrichtung zusätzlich zur Authentifizierung genutzt werden kann. Ein weiterer Vorteil ergibt sich dadurch, dass bei einem zu geringen Ladezustand eines Energiespeichers des mobilen Geräts die Ladevorrichtung ebenfalls zur Aufladung des mobilen Geräts (ggf. über die gleiche Übertragungsvorrichtung) genutzt werden kann.

Ferner kann es im Rahmen der Erfindung vorgesehen sein, dass die Ladevorrichtung gemäß einem Qi-Standard ausgebildet ist, um die Energieübertragung zum mobilen Gerät, und vorzugsweise eine Datenübertragung als weitere Kommunikation mit dem mobilen Gerät, mittels elektromagnetischer Induktion bereitzustellen, wobei bevorzugt hierzu ein Abstand zwischen der Ladevorrichtung und dem mobilen Gerät von maximal 50 cm, besonders bevorzugt maximal 10 cm, insbesondere maximal 4 cm betragen darf. Insbesondere ist dieser Maximalabstand deshalb sinnvoll, um eine ausreichende Energieübertragung zur Aufladung in angemessener Zeit bereitzustellen. Die übertragende Leistung kann bei der Aufladung ggf. höher sein als bei der Kommunikation des Kommunikationssystems bzw. bei der Aussendung des Kommunikationssignals. Die weitere Kommunikation ermöglicht es, während der Aufladung den Vorgang zu steuern und z. B. abzubrechen, wenn der maximale Ladezustand beim mobilen Gerät erreicht ist. Die weitere Kommunikation nutzt dabei zur Datenübertragung vom mobilen Gerät an die Ladevorrichtung z. B. eine Lastmodulation. Insbesondere kann die weitere Kommunikation eine bidirektionale Kommunikation sein oder eine Kommunikation vom mobilen Gerät an die Ladevorrichtung sein. Dagegen kann die Kommunikation des Kommunikationssystems z. B. zur Aussendung des Wecksignals eine unidirektionale Kommunikation oder eine Kommunikation vom Fahrzeug an das mobile Gerät sein.

Insbesondere wird unter einem Qi-Standard ein Standard zur induktiven Energieübertragung des Wireless-Power-Consortiums verstanden. Hierbei kann mittels einer drahtlosen Energieübertragung durch elektromagnetische Induktion eine Aufladung eines Energiespeichers des mobilen Geräts erfolgen. Die Übertragungsfrequenz liegt dabei für die Energieübertragung bspw. im Bereich von 110 kHz bis 205 kHz. Die übertragende Leistung kann bspw. im Bereich von 5 Watt bis 15 Watt oder auch max. 120 Watt betragen. Ferner kann durch die weitere Kommunikation eine Datenübertragung zwischen dem mobilen Gerät und der Ladevorrichtung mit vorzugsweise bis zu 2 kBit erfolgen.

Das mobile Gerät kann bspw. als Mobiltelefon oder als ID-Geber oder als Smartphone oder als Tablet oder dergleichen ausgeführt sein. Dabei kann es möglich sein, dass das mobile Gerät eine Energieübertragungsschnittstelle aufweist, um mittels der Energieübertragung der Ladevorrichtung eine Aufladung eines Energiespeichers des mobilen Geräts durchzuführen. Zusätzlich kann das mobile Gerät ggf. eine Kommunikationsschnittstelle aufweisen, um ein Kommunikationssignal eines Kommunikationssystems des Fahrzeuges zu empfangen. Ebenfalls zusätzlich kann eine weitere Kommunikationsschnittstelle vorgesehen sein, um als Reaktion auf einen Empfang des Kommunikationssignals ein weiteres Kommunikationssignal (Antwortsignal) auszusenden. Die Kommunikationsschnittstelle ist dabei bspw. eine LF-Kommunikationsschnittstelle und die weitere Kommunikationsschnittstelle ist bspw. eine HF-Kommunikationsschnittstelle (HF steht hierbei für High Frequency). Die Energieübertragungsschnittstelle ist bspw. als eine Qi-Übertragungsschnittstelle ausgebildet. Ferner kann auch eine Mobilfunkschnittstelle beim mobilen Gerät vorgesehen sein.

Es ist ferner denkbar, dass neben dem mobilen Gerät für die Energieübertragung auch weitere mobile Geräte ggf. unterschiedlicher Art vorgesehen sind. Bspw. kann als das mobile Gerät ein erstes mobiles Gerät z. B. als Smartphone oder dergleichen vorgesehen sein, und über eine Energieübertragungsschnittstelle des ersten mobilen Geräts durch die Ladevorrichtung aufgeladen werden. Auch kann als das weitere mobile Gerät ein zweites mobiles Gerät z. B. als ID-Geber oder dergleichen vorgesehen sein. Die kontaktlose Kommunikation für das Fahrzeug über die Ladevorrichtung kann dann mit dem zweiten mobilen Gerät, ggf. auch parallel zur Aufladung des ersten mobilen Geräts, z. B. über eine Kommunikationsschnittstelle des zweiten mobilen Geräts erfolgen. Hierzu kann die Kommunikationsschnittstelle z. B. ein Kommunikationssignal, wie ein Wecksignal, von der Ladevorrichtung empfangen. Um die Kommunikation parallel zur Aufladung zu ermöglichen, kann vorteilhafterweise durch das Kommunikationsmittel und/oder durch das Kommunikationssystem des Fahrzeuges zwischen der Aufladung und der Kommunikation wiederholt umgeschaltet werden.

Sämtliche Ausführungen hinsichtlich des mobilen Geräts können sich optional sowohl auf das mobile Gerät (für die Energieübertragung) als auch auf wenigstens ein weiteres mobiles Gerät (z. B. für die Kommunikation, also als Kommunikationsempfänger bspw. des Wecksignals) beziehen.

Es kann weiter möglich sein, dass für die Bereitstellung der kontaktlosen Kommunikation für das Fahrzeug ein Kommunikationssystem des Fahrzeuges vorgesehen ist, und vorzugsweise als ein LF-Kommunikationssystem ausgeführt ist, um die Kommunikation als LF-Kommunikation bereitzustellen. Dies hat den Vorteil, dass durch das Kommunikationssystem ein Wecksignal ausgesendet werden kann, um hierdurch ein passives Zugangssystem bereitzustellen. Alternativ oder zusätzlich ist es denkbar, dass die Kommunikation als LF-Kommunikation und/oder das Kommunikationsmittel als LF-Schnittstelle ausgebildet ist.

Ferner ist es optional vorgesehen, dass die Ladevorrichtung und/oder ein Kommunikationssystem des Fahrzeuges dazu ausgeführt ist, über die Kommunikation ein Wecksignal an ein mobiles Gerät auszusenden, vorzugsweise in einem Frequenzbereich von 10 kHz bis 500 kHz, vorzugsweise 100 KHz bis 300 kHz, insbesondere 110 kHz bis 140 kHz, bevorzugt 125 kHz, um einen Authentifizierungsvorgang über das Wecksignal zu initiieren. Dabei kann es möglich sein, dass eine Übertragungsfrequenz der Energieübertragung der Ladevorrichtung in einem davon abweichenden Frequenzbereich liegt, z. B. im Bereich von 100 kHz bis 110 kHz. Ferner kann es möglich sein, dass das mobile Gerät als Reaktion auf einen Empfang des Wecksignals mit einem Antwortsignal antwortet, welches z. B. durch eine HF-Kommunikationsschnittstelle des mobilen Geräts im Frequenzbereich von 200 MHz bis 400 MHz, vorzugsweise 315 MHz, oder im Bereich von 300 MHz bis 600 MHz, vorzugsweise 433 MHz, oder im Bereich von 700 MHz bis 900 MHz, vorzugsweise 868 MHz, ausgesendet wird. Hierbei kann z. B eine Modulation der Kommunikation zur Aussendung des Wecksignals zum Einsatz kommen, welche sich ggf. von der Modulation zur weiteren Kommunikation bei der Energieübertragung unterscheidet. Die Modulation ist bspw. eine Amplituden- oder Frequenzmodulation oder eine Amplituden- oder Frequenzumtastung bei der Kommunikation des Kommunikationssystems (insbesondere zur Aussendung des Wecksignals).

Es kann ferner möglich sein, dass die Ladevorrichtung mobil ausgeführt ist, und vorzugsweise mittels des Kommunikationsmittels am Fahrzeug angeschlossen und/oder mit einer weiteren Elektronik eines Kommunikationssystems des Fahrzeuges elektrisch verschaltet ist. Dabei kann es auch möglich sein, dass die Ladevorrichtung lösbar mittels des Kommunikationsmittels am Fahrzeug angeschlossen ist, um die Ladevorrichtung z. B. für einen Transport außerhalb des Fahrzeuges zu entfernen. Hierzu kann das Kommunikationsmittel bspw. eine Rastverbindung oder eine Steckverbindung oder dergleichen aufweisen, um die lösbare Verbindung zwischen der Ladevorrichtung und dem Fahrzeug herzustellen.

Optional ist es denkbar, dass die Ladevorrichtung und/oder ein Kommunikationssystem des Fahrzeuges als Teil eines passiven Zugangssystems und/oder passiven Motorstartsystems ausgebildet ist, um wiederholt und/oder automatisch ein Wecksignal mittels der Kommunikation zur Detektion des (oder wenigstens eines weiteren) mobilen Geräts auszusenden. Die Kommunikation kann z. B. dadurch das passive Zugangssystem bereitstellen, dass durch das Aussenden eines Wecksignals mittels der Kommunikation das mobile Gerät veranlasst wird, ein Antwortsignal an das Fahrzeug zur Authentifizierung auszusenden. Dies kann automatisch durch das mobile Gerät bei Empfang des Wecksignals erfolgen, ohne dass eine aktive Betätigung des mobilen Gerätes durch einen Benutzer notwendig ist. In ähnlicher Weise kann das passive Motorstartsystem (z. B. ein Keyless-Go-System) durch die Kommunikation dadurch bereitgestellt werden, dass anhand des Antwortsignals und/oder anhand einer Signallaufzeitmessung unter Nutzung des Wecksignals und/oder des Antwortsignals das mobile Gerät im Fahrzeuginnenraum lokalisiert wird. Auch kann es möglich sein, dass die Lokalisierung im Innenraum dadurch erfolgt, dass das Antwortsignal durch eine Antenne im Innenraum empfangen wird. Bspw. kann die Voraussetzung für einen Motorstart sein, dass das mobile Gerät im Innenraum des Fahrzeuges durch die Kommunikation lokalisiert wird. Dies ermöglicht eine komfortable Bedienung des Fahrzeuges.

Ebenfalls Gegenstand der Erfindung ist eine Ladevorrichtung zur kontaktlosen Energieübertragung an ein mobiles Gerät, insbesondere zur kontaktlosen Aufladung des mobilen Geräts mittels induktiver Energieübertragung. Hierbei ist vorgesehen, dass die Ladevorrichtung ein Kommunikationsmittel zur Bereitstellung einer kontaktlosen Kommunikation, insbesondere eine Kommunikationsfunktion für das Fahrzeug, insbesondere als eine Kommunikation eines Kommunikationssystems des Fahrzeuges, aufweist. Damit bringt die erfindungsgemäße Ladevorrichtung die gleichen Vorteile mit sich, wie sie ausführlich mit Bezug auf ein erfindungsgemäßes System beschrieben worden sind. Zudem kann die Ladevorrichtung Teil eines erfindungsgemäßen Systems sein, oder gemäß dem erfindungsgemäßen System ausgebildet sein. Bevorzugt wird dabei die Ladevorrichtung zur Bereitstellung einer Kommunikationsfunktion des Fahrzeuges, vorzugsweise eines Sicherheitssystems des Fahrzeuges, insbesondere zur Authentifizierung, verwendet.

Ebenfalls Gegenstand der Erfindung ist eine Verwendung einer, insbesondere erfindungsgemäßen, Ladevorrichtung, vorzugsweise eines Qi-Laders, zur Kommunikation, insbesondere LF-Kommunikation für ein Fahrzeug, insbesondere durch ein Kommunikationssystem des Fahrzeuges. Vorzugsweise ist dabei vorgesehen, dass die Ladevorrichtung ausgebildet ist zur kontaktlosen Energieübertragung an ein mobiles Gerät. Bevorzugt wird dabei die Ladevorrichtung zur Bereitstellung einer Kommunikationsfunktion des Fahrzeuges, vorzugsweise eines Sicherheitssystems des Fahrzeuges, insbesondere zur Authentifizierung, verwendet.

Damit bringt die erfindungsgemäße Verwendung die gleichen Vorteile mit sich, wie sie ausführlich mit Bezug auf ein erfindungsgemäßes System und/oder eine erfindungsgemäße Ladevorrichtung beschrieben worden sind.

Ebenfalls unter Schutz gestellt ist ein ID-Geber zur Authentifizierung an einem Fahrzeug, aufweisend eine Energieübertragungsschnittstelle zur kontaktlosen Energieaufnahme von einer Ladevorrichtung, insbesondere einer erfindungsgemäßen Ladevorrichtung, sowie eine Kommunikationsschnittstelle zum kontaktlosen Empfangen eines Kommunikationssignals zur Authentifizierung am Fahrzeug. Es ist dabei denkbar, dass die Energieübertragungsschnittstelle und die Kommunikationsschnittstelle jeweils als Elektronik ausgeführt sind und ggf. eine gemeinsame Antenne bzw. Spule zur Energieübertragung bzw. Kommunikation nutzen.

Es kann möglich sein, dass der erfindungsgemäße ID-Geber eine Energieübertragungsschnittstelle zur kontaktlosen Energieaufnahme gemäß einem Qi-Standard aufweist. Alternativ oder zusätzlich kann die Energieübertragungsschnittstelle des ID-Gebers wie eine Energieübertragungsschnittstelle des mobilen Geräts ausgebildet sein, und/oder kontaktlos ein Signal zur Energieübertragung von einer (insbesondere erfindungsgemäßen) Ladevorrichtung empfangen. Dieses empfangene Signal kann dann z. B. durch den ID-Geber dazu genutzt werden, einen Energiespeicher des ID-Gebers aufzuladen. Vorteilhaferweise dient der ID-Geber zu kontaktlosen Kommunikation mit dem Fahrzeug, vorzugsweise zur Authentifizierung am Fahrzeug. Hierzu kann der ID-Geber z. B. über eine Kommunikationsschnittstelle ein Kommunikationssignal wie ein Wecksignal, insbesondere von einer Ladevorrichtung, kontaktlos empfangen. Ferner kann der ID-Geber eine Elektronik aufweist, um bei einem Empfang des Kommunikationssignals ein Antwortsignal an das Fahrzeug zu senden, ggf. über eine weitere Kommunikationsschnittstelle.

Auch ist es möglich, dass der erfindungsgemäße ID-Geber Teil eines erfindungsgemäßen Systems ist. Dies ermöglicht es, dass während einer Aufladung des ID-Gebers durch die Ladevorrichtung außerdem die kontaktlose Kommunikation für das Fahrzeug mit dem ID-Geber und/oder dem mobilen Gerät über die Ladevorrichtung durchgeführt wird. Hierzu wird z. B. mittels des Kommunikationsmittels zwischen der Kommunikation und der Energieübertragung umgeschaltet.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigt:
- Fig. 1: eine schematische Draufsicht auf ein Fahrzeug mit einem erfindungsgemäßen System,
- Fig. 2: eine weitere schematische Draufsicht auf ein Fahrzeug mit einem erfindungsgemäßen System,
- Fig. 3: eine schematische Darstellung eines erfindungsgemäßen Systems sowie eines erfindungsgemäßen ID-Gebers.

In den nachfolgenden Figuren werden für die gleichen technischen Merkmale auch von unterschiedlichen Ausführungsbeispielen die identischen Bezugszeichen verwendet.

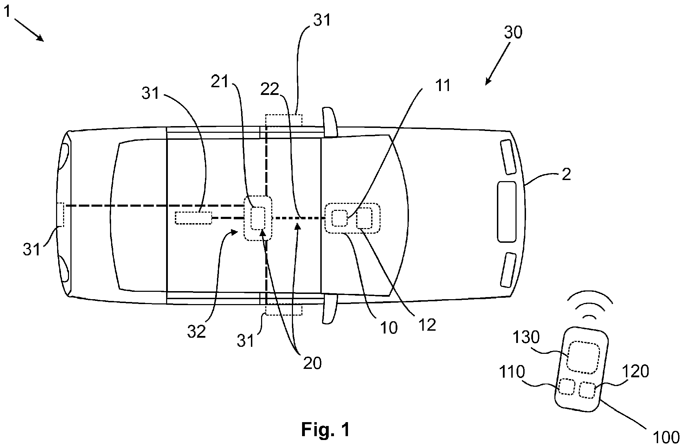

In Figur 1 ist ein erfindungsgemäßes System 1 für ein Fahrzeug 2 gezeigt, welches insbesondere zur Bereitstellung eines passiven Zugangssystems des Fahrzeuges 2 dient. Das erfindungsgemäße System 1 kann eine Ladevorrichtung 10 zur kontaktlosen Energieübertragung an ein mobiles Gerät 100, insbesondere zur kontaktlosen Aufladung des mobilen Geräts 100 mittels induktiver Energieübertragung, aufweisen. Hierzu kann die Ladevorrichtung 10 z. B. als Qi-Lader (oder auch Qi-Ladegerät) ausgeführt sein. Die induktive Energieübertragung ermöglicht eine Aufladung eines Energiespeichers 130 des mobilen Geräts 100, ohne dass ein Kontakt zwischen dem Energiespeicher 130 und der Ladevorrichtung 10 hergestellt werden muss. Hierzu kann z. B. eine Energieübertragungsschnittstelle 120 (oder auch Aufladeschnittstelle 120) des mobilen Geräts 10 vorgesehen sein, welche ein Signal zur Energieübertragung von der Ladevorrichtung 10 kontaktlos empfängt und die damit übertragene Energie an den Energiespeicher 130 weiterleitet.

Darüber hinaus kann ein Kommunikationssystem 30, insbesondere LF-Kommunikationssystem 30, beim Fahrzeug 2 vorgesehen sein. Beispielhaft ist hier das Kommunikationssystem 30 als System des Fahrzeuges 2 gezeigt, wobei die Ladevorrichtung ggf. als (nachträglich integrierter) Teil des Kommunikationssystems 30 aufgefasst werden kann. Das Kommunikationssystem 30 dient z. B. zur Aussendung eines Wecksignals über Antennen 31 des Fahrzeuges 2. Die Antennen 31 sind z. B. in einem Fahrzeugheck und/oder in einem Seitenbereich des Fahrzeuges 2, vorzugsweise in Türgriffen des Fahrzeuges 2, und/oder auf einem Fahrzeugdach angeordnet und/oder befestigt. Dabei kann es möglich sein, dass ein Kommunikationssignal über die Antennen 31 dadurch ausgesendet wird, dass eine Elektronik 32 des Fahrzeuges 2, insbesondere ein Steuergerät, elektrisch mit den Antennen 31 verschaltet ist, um über die Verschaltung Signale an die Antenne 31 zu übertragen. Diese Elektronik des Fahrzeuges 2 ist insbesondere separat ausgebildet von einer Elektronik 12 der Ladevorrichtung 10, d. h. Ladevorrichtungselektronik 12. Insbesondere kann die Elektronik 32 des Fahrzeuges 2 eine Verarbeitungsvorrichtung 21, wie einen Mikrocontroller, aufweisen. Dieser dient z. B. zur Modulation des übertragenen Signals, um dieses zur Aussendung des Kommunikationssignals zu nutzen. Auch ist es möglich, dass das Kommunikationssystem 30 zum Aussenden des Wecksignals ausschließlich die Ladevorrichtung 10 nutzt, sodass hierzu oder vollständig ggf. auf die weiteren Antennen 31 verzichtet wird. In diesem Fall kann die Ladevorrichtung 10 als einziger Teil der Kommunikationsvorrichtung 30 angesehen sein, und somit ggf. nicht mit einer weiteren Elektronik des Fahrzeuges zur Kommunikation gekoppelt sein.

Ferner kann ein Kommunikationsmittel 20 zur Bereitstellung einer kontaktlosen Kommunikation des Kommunikationssystems 30 des Fahrzeuges 2 über die Ladevorrichtung 10 vorgesehen sein. Das Kommunikationsmittel 20 weist hierzu z. B. eine elektrische Kopplungsvorrichtung 22 auf, um eine Integration der Ladevorrichtung 10 in das Kommunikationssystem 30 zu ermöglichen. Das Kommunikationsmittel 20 kann dabei zur Signalübertragung an die Ladevorrichtung 10 ausgeführt sein, um anhand der Signalübertragung ein Kommunikationssignal der Kommunikation über die Ladevorrichtung 10 auszusenden, vorzugsweise mittels einer Übertragungsvorrichtung 11 der Ladevorrichtung 10, bevorzugt zumindest teilweise gleichzeitig mit der zusätzlichen Aussendung des Kommunikationssignals mittels der weiteren Antennen 31 des Kommunikationssystems 30. Bspw. kann die Übertragungsvorrichtung 11 als eine Nahfeldübertragungsspule und/oder als Antenne im Innenraum des Fahrzeuges 2 angeordnet sein, z. B. im Bereich einer Mittelkonsole. Entsprechend kann die Ladevorrichtung 10 dazu genutzt werden, für das Fahrzeug 2 bzw. für das Kommunikationssystem 30 das Kommunikationssignal, insbesondere ein Wecksignal, im Innenraum des Fahrzeuges 2 auszusenden und/oder bereitzustellen. Um das Kommunikationssignal zu empfangen, kann das mobile Gerät z. B. eine Kommunikationsschnittstelle 110 aufweisen. Diese kann vorteilhafterweise mit einer Elektronik des mobilen Geräts 100 verbunden sein, um bei Empfang des Kommunikationssignals das Aussenden eines Antwortsignals ans Fahrzeug 2 zu initiieren.

Ferner ist es denkbar, dass das Kommunikationsmittel 20 die Kopplungsvorrichtung 22 zur elektrischen Verbindung einer Elektronik 32 des Fahrzeuges 2 außerhalb der Ladevorrichtung 10 mit einer Ladevorrichtungselektronik 12 und/oder mit einer Übertragungsvorrichtung 11 der Ladevorrichtung 10 aufweist, um über diese Verbindung die Kommunikation zu initiieren. Es kann möglich sein, dass die Ladevorrichtung 10 primär und/oder originär nur eine kontaktlose Aufladung des mobilen Geräts 100 als Funktionalität der Energieübertragung E aufweist, wobei vorzugsweise die Aufladung funktional autonom und/oder unabhängig von dem Kommunikationssystem 30 des Fahrzeuges 2 bereitgestellt ist, und bevorzugt die Bereitstellung der kontaktlosen Kommunikation für das Fahrzeug 2 als sekundäre Funktionalität der Energieübertragung E ausgeführt ist.

Darüber hinaus ist es möglich, dass die Ladevorrichtung 10 die Übertragungsvorrichtung 11 vorzugsweise als eine Antenne 11 und/oder Übertragungsspule 11 aufweist, um eine Aussendung von Kommunikationssignalen der Kommunikation des Kommunikationssystems 30 und die Energieübertragung zur Aufladung des mobilen Geräts 100 über die gleiche Übertragungsvorrichtung 11 durchzuführen. Die Übertragungsvorrichtung 11 wird auf diese Weise z. B. als zentrale Antenne 31 des Kommunikationssystems 30 genutzt.

Ebenfalls visualisiert ist anhand Figur 1 eine Verwendung einer Ladevorrichtung 10, vorzugsweise eines Qi-Laders, zur LF-Kommunikation durch ein Kommunikationssystem 30 eines Fahrzeuges 2.

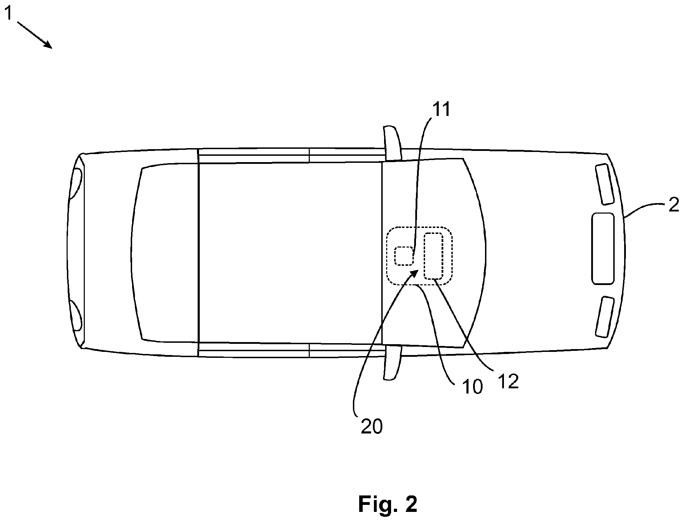

In Figur 2 ist ein erfindungsgemäßes System 1 gezeigt, bei welchem das Kommunikationsmittel 20 zur Bereitstellung der Kommunikation, insbesondere einer Kommunikationsfunktion des Fahrzeuges 2 ein Teil (einer Elektronik 12) der Ladevorrichtung 10 ist, insbesondere in der Ladevorrichtung 10 vollständig integriert ist. Insbesondere kann auf diese Weise die Ladevorrichtung 10 unabhängig und/oder autonom von (irgend)einem Kommunikationssystem des Fahrzeuges 2 die Kommunikation für das Fahrzeug 2 bereitstellen. Bspw. kann hierzu möglich sein, dass (lediglich) eine Energieversorgung zwischen dem Fahrzeug 2 und der Ladevorrichtung 10 vorgesehen ist. Hingegen kann auf eine Signal- und/oder Kommunikationsverbindung zwischen dem Fahrzeug 2 und der Ladevorrichtung 10 ggf. verzichtet werden. Bspw. ist die Ladevorrichtung 10, insbesondere das Kommunikationsmittel 20, dazu konfiguriert, wiederholt ein Kommunikationssignal 20 zur Bereitstellung der Kommunikation für das Fahrzeug 2 auszusenden. Das Kommunikationssignal 20 ist dabei bspw. ein Wecksignal, um das mobile Gerät 100 und/oder ein weiteres mobiles Gerät 100, wie einen ID-Geber, zu wecken.

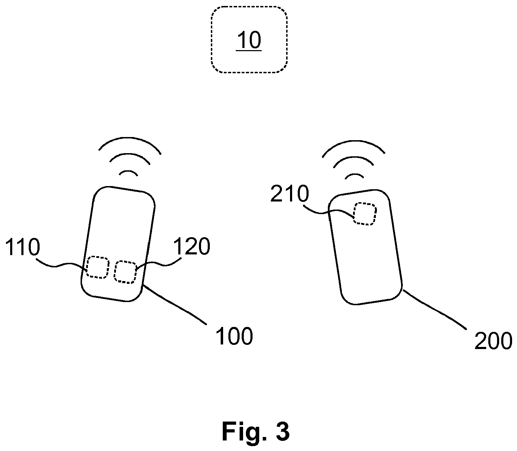

Ferner ist in Figur 3 ein erfindungsgemäßer ID-Geber 200 gezeigt, welcher eine Energieübertragungsschnittstelle 210 zur kontaktlosen Energieaufnahme gemäß einem Qi-Standard aufweist. Die Energieübertragungsschnittstelle 210 kann dabei wie die Aufladeschnittstelle 120 des mobilen Geräts ausgebildet sein, und/oder ein Signal zur Energieübertragung von der Ladevorrichtung 10 empfangen. Dieses empfangene Signal kann durch den ID-Geber 200 dazu genutzt werden, einen Energiespeicher 130 des ID-Gebers 200 aufzuladen. Darüber hinaus ist dargestellt, dass während einer Aufladung des ID-Gebers 200 außerdem die kontaktlose Kommunikation für das Fahrzeug 2 mit dem mobilen Gerät 100 durchgeführt werden kann, und/oder umgekehrt. Hierzu wird z. B. mittels des Kommunikationsmittels 20 zwischen der Kommunikation und der Energieübertragung umgeschaltet.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: System
- 2: Fahrzeug

- 10: Ladevorrichtung
- 11: Übertragungsvorrichtung, ladegerätseitige Antenne, Übertragungsspule
- 12: Ladevorrichtungselektronik, Elektronik der Ladevorrichtung

- 20: Kommunikationsmittel
- 21: Verarbeitungsvorrichtung
- 22: Kopplungsvorrichtung

- 30: Kommunikationssystem, LF-Kommunikationssystem
- 31: Antenne
- 32: Elektronik des Fahrzeuges

- 100: mobiles Gerät, Identifikationsgeber
- 110: Kommunikationsschnittstelle des mobilen Geräts

- 120: Aufladeschnittstelle des mobilen Geräts
- 130: Energiespeicher

- 200: ID-Geber
- 210: Energieübertragungsschnittstelle

## Patentansprüche

1. System (1) für ein Fahrzeug (2), insbesondere zur Bereitstellung eines passiven Zugangssystems des Fahrzeuges (2), aufweisend:
- eine Ladevorrichtung (10) zur kontaktlosen Energieübertragung an ein mobiles Gerät (100), insbesondere zur kontaktlosen Aufladung des mobilen Geräts (100) mittels induktiver Energieübertragung,
- ein Kommunikationsmittel (20) zur Bereitstellung einer kontaktlosen Kommunikation für das Fahrzeug (2) über die Ladevorrichtung (10).

2. System (1) nach Anspruch 1,
**dadurch gekennzeichnet,**
**dass** das Kommunikationsmittel (20) als ein Teil einer Elektronik (12) der Ladevorrichtung (10) zur Bereitstellung einer Kommunikationsfunktion des Fahrzeuges (2) ausgebildet ist oder eine elektrische Kopplungsvorrichtung (22) zur Integration der Ladevorrichtung (10) in ein Kommunikationssystem (30) des Fahrzeuges (2) aufweist.

3. System (1) nach Anspruch 1 oder 2,
**dadurch gekennzeichnet,**
**dass** das Kommunikationsmittel (20), vorzugsweise eine elektrische Kopplungsvorrichtung (22) des Kommunikationsmittels (20), zur Signalübertragung an die Ladevorrichtung (10) ausgeführt ist, um anhand der Signalübertragung ein Kommunikationssignal der Kommunikation über die Ladevorrichtung (10) auszusenden, vorzugsweise mittels einer Übertragungsvorrichtung (11) der Ladevorrichtung (10), bevorzugt zumindest teilweise gleichzeitig mit der zusätzlichen Aussendung des Kommunikationssignals mittels weiterer Antennen (31) des Fahrzeuges (2).

4. System (1) nach einem der vorhergehenden Ansprüchen,
**dadurch gekennzeichnet,**
**dass** das Kommunikationsmittel (20) eine Kopplungsvorrichtung (22) zur elektrischen Verbindung einer Elektronik (32) des Fahrzeuges (2) außerhalb der Ladevorrichtung (10) mit einer Ladevorrichtungselektronik (12) und/oder mit einer Übertragungsvorrichtung (11) der Ladevorrichtung (10) aufweist, um über diese Verbindung die Kommunikation zu initiieren.

5. System (1) nach einem der vorhergehenden Ansprüchen,
**dadurch gekennzeichnet,**
**dass** die Ladevorrichtung (10) primär und/oder originär nur eine kontaktlose Aufladung des mobilen Geräts (100) als Funktionalität der Energieübertragung aufweist, wobei vorzugsweise die Bereitstellung der kontaktlosen Kommunikation als sekundäre Funktionalität der Energieübertragung ausgeführt ist
und/oder dass die Ladevorrichtung (10) unangepasst an das Fahrzeug (2) ausgeführt ist oder lediglich das Kommunikationsmittel (20) als nachträglich integrierte Anpassung aufweist
und/oder dass die Ladevorrichtung (10) eine Übertragungsvorrichtung (11), vorzugsweise eine Antenne (11) und/oder Übertragungsspule (11), aufweist, um eine Aussendung von Kommunikationssignalen der Kommunikation und die Energieübertragung zur Aufladung des mobilen Geräts (100) über die gleiche Übertragungsvorrichtung (11) durchzuführen.

6. System (1) nach einem der vorhergehenden Ansprüchen,
**dadurch gekennzeichnet,**
**dass** die Kommunikation eine erste Kommunikation ist, und die Ladevorrichtung (10) dazu ausgeführt ist, auch bei der Energieübertragung eine andersartige zweite Kommunikation mit dem mobilen Gerät (100) durchzuführen, welche sich von der ersten Kommunikation hinsichtlich der Kommunikationstechnologie und/oder des Modulationsverfahrens unterscheidet.

7. System (1) nach einem der vorhergehenden Ansprüchen,
**dadurch gekennzeichnet,**
**dass** die Ladevorrichtung (10) eine bauliche Einheit bildet, und vorzugsweise baulich getrennt von weiteren Komponenten des Fahrzeuges (2) ausgebildet ist
und/oder dass die Ladevorrichtung (10) ausschließlich eine einzige elektrische Verbindung zum Fahrzeug aufweist, wobei diese elektrische Verbindung ausschließlich zur Energieversorgung der Ladevorrichtung (10) ausgeführt ist
und/oder dass die Ladevorrichtung (10) vollständig das Kommunikationsmittel (20) aufweist und dazu ausgeführt ist, mittels des Kommunikationsmittels (20) unabhängig und/oder autonom vom Fahrzeug (2) die Kommunikation für das Fahrzeug (2) durchzuführen, vorzugsweise ein Kommunikationssignal (20) der Kommunikation als Wecksignal für das oder ein weiteres mobiles Gerät (100) auszusenden.

8. System (1) nach einem der vorhergehenden Ansprüchen,
**dadurch gekennzeichnet,**
**dass** für die Bereitstellung der kontaktlosen Kommunikation ein Kommunikationssystem (30), vorzugsweise ein LF-Kommunikationssystem (30), in das Fahrzeug (2) als Teil einer Fahrzeugelektronik integriert ist, wobei
das Kommunikationssystem (30) wenigstens eine Antenne (31), vorzugsweise LF-Antenne (31), ebenfalls zur Bereitstellung der kontaktlosen Kommunikation, vorzugsweise LF-Funkkommunikation, aufweist.

9. System (1) nach einem der vorhergehenden Ansprüchen,
**dadurch gekennzeichnet,**
**dass** ein Kommunikationssystem (30) des Fahrzeuges (2) dazu ausgebildet ist, die kontaktlose Kommunikation mittels des Kommunikationsmittels (20) über die Ladevorrichtung (10) mit dem mobilen Gerät (100) und/oder einem weiteren mobilen Gerät (100) durchzuführen, um vorzugsweise eine Authentifizierung des mobilen Geräts (100) durchzuführen.

10. System (1) nach einem der vorhergehenden Ansprüchen,
**dadurch gekennzeichnet,**
**dass** die Ladevorrichtung (10) gemäß einem Qi-Standard ausgebildet ist, um die Energieübertragung zum mobilen Gerät (100), und vorzugsweise eine Datenübertragung als weitere Kommunikation mit dem mobilen Gerät (100), mittels elektromagnetischer Induktion bereitzustellen, wobei bevorzugt hierzu ein Abstand zwischen der Ladevorrichtung (10) und dem mobilen Gerät (100) maximal 50 cm, besonders bevorzugt maximal 10 cm, insbesondere maximal 4 cm betragen darf.

11. System (1) nach einem der vorhergehenden Ansprüchen,
**dadurch gekennzeichnet,**
**dass** für die Bereitstellung der kontaktlosen Kommunikation ein LF-Kommunikationssystem (30) des Fahrzeuges (2) vorgesehen ist, um die Kommunikation als eine LF-Kommunikation bereitzustellen.

12. System (1) nach einem der vorhergehenden Ansprüchen,
**dadurch gekennzeichnet,**
**dass** die Ladevorrichtung (10) und/oder ein Kommunikationssystem (30) des Fahrzeuges (2) dazu ausgeführt ist, über die Kommunikation ein Wecksignal an ein mobiles Gerät (100) auszusenden, vorzugsweise in einem Frequenzbereich von 10 kHz bis 500 kHz, vorzugsweise 100 KHz bis 300 kHz, bevorzugt 125 kHz, um einen Authentifizierungsvorgang über das Wecksignal zu initiieren
und/oder dass die Ladevorrichtung (10) mobil ausgeführt ist, und vorzugsweise mittels des Kommunikationsmittels (20) am Fahrzeug angeschlossen und/oder mit einer weiteren Elektronik (32) eines Kommunikationssystems (30) des Fahrzeuges (2) elektrisch verschaltet ist
und/oder dass die Ladevorrichtung (10) und/oder ein Kommunikationssystem (30) des Fahrzeuges (2) als Teil eines passiven Zugangssystems und/oder passiven Motorstartsystems ausgebildet ist, um wiederholt und/oder automatisch ein Wecksignal mittels der Kommunikation zur Detektion des mobilen Geräts (100) auszusenden.

13. Ladevorrichtung (10) zur kontaktlosen Energieübertragung an ein mobiles Gerät (100), insbesondere zur kontaktlosen Aufladung des mobilen Geräts (100) mittels induktiver Energieübertragung, wobei die Ladevorrichtung (10) ein Kommunikationsmittel (20) zur Bereitstellung einer kontaktlosen Kommunikation für das Fahrzeug (2) aufweist.

14. Verwendung einer Ladevorrichtung (10), vorzugsweise eines Qi-Laders, zur LF-Kommunikation für ein Fahrzeug (2), wobei die Ladevorrichtung (10) ausgebildet ist zur kontaktlosen Energieübertragung an ein mobiles Gerät (100).

15. ID-Geber (200) zur Authentifizierung an einem Fahrzeug (2), aufweisend eine Energieübertragungsschnittstelle (210) zur kontaktlosen Energieaufnahme von einer Ladevorrichtung (10), insbesondere nach einem der vorhergehenden Ansprüche, sowie eine Kommunikationsschnittstelle zum kontaktlosen Empfangen eines Kommunikationssignals (20) zur Authentifizierung am Fahrzeug (2).
